# EUROPÄISCHE PATENTSCHRIFT

(11) **EP 1 526 980 B1**
(45) Veröffentlichungstag und Bekanntmachung des Hinweises auf die Patenterteilung: **01.04.2009**
(21) Anmeldenummer: 03784144.2
(22) Anmeldetag: 01.08.2003
(51) Int. Cl.: B60L 11/18, B60L 15/20, H02J 7/34

(54) **ELEKTRISCHE ANTRIEBSQUELLE FÜR MOTORISCHEN ANTRIEB UND FAHRZEUG MIT EINER SOLCHEN ANTRIEBSQUELLE**
ELECTRIC DRIVE SOURCE FOR A MOTOR-DRIVE AND VEHICLE WITH SAID DRIVE SOURCE
SOURCE D'ENTRAINEMENT ELECTRIQUE POUR ENTRAINEMENT MOTEUR ET VEHICULE MOTEUR POURVU DE LADITE SOURCE

(30) Priorität: 02.08.2002 DE 10235431
(43) Veröffentlichungstag der Anmeldung: 04.05.2005
(73) Patentinhaber: Proton Motor Fuel Cell GmbH, 82319 Starnberg (DE)
(72) Erfinder: WALLNER, Stefan, 82008 Unterhaching (DE); HINZ, Matthias, 18439 Stralsund (DE)
(74) Vertreter: Klunker . Schmitt-Nilson . Hirsch
(86) Internationale Anmeldenummer: PCT/EP2003/008545
(87) Internationale Veröffentlichungsnummer: WO 2004/014685

(56) Entgegenhaltungen:
- US-A- 5 710 699
- US-A1- 2001 053 465
- US-A1- 2002 177 021
- US-B1- 6 323 626
- US-B1- 6 344 985

## Beschreibung

Die Erfindung betrifft eine elektrische Antriebsquelle für einen motorischen Antrieb, mit einer Brennstoffzelleneinheit und einem als Ultrakondensatoreinheit ausgeführten Zwischenspeicher, der zu der Brennstoffzelleneinheit parallel geschaltet ist, und an den der Antrieb angeschlossen ist.

Speziell betrifft die Erfindung eine Antriebsquelle für den elektromotorischen Antrieb von Gebrauchsfahrzeugen, so z.B. Hubstaplern, die derzeit üblicherweise mit Batterien angetrieben werden. Die derzeitige Entwicklung von Brennstoffzellen macht deren Einsatz in Elektrofahrzeugen interessant. Der heutige Entwicklungsstand scheint die Fertigung von Elektrofahrzeugen für unterschiedlichste Anwendungen innerhalb der nächsten Jahrzehnte zu ermöglichen. Da Brennstoffzellen selbst keine Energie speichern können, benötigen mit Brennstoffzellen ausgestattete Elektrofahrzeuge (dies gilt auch für Hybridfahrzeuge mit elektrischen Antriebskomponenten) einen Zwischenspeicher. Bekannt sind für Zwischenspeicher die üblichen Fahrzeugbatterien, allerdings auch Lithium-lonen-Batterien. Nachteilig bei den Batterien ist deren hohes Gewicht und lange Ladezeit. Wird von dem Antrieb - z.B. beim Beschleunigen - kurzfristig hohe Leistung abgefordert, so werden die Batterien erheblich belastet. Der häufige Austausch von stark belasteten Batterien macht diese als Zwischenspeicher problematisch.

Konventionelle Kondensatoren sind als Energie-Zwischenspeicher in Elektrofahrzeugen kaum einsetzbar, da ihre Speicherkapazität zu gering ist, um den üblichen Anforderungen beim Betrieb solcher Fahrzeuge zu entsprechen.

Eine taugliche Alternative zu den oben erläuterten Zwischenspeichern sind sogenannte Ultrakondensatoren (auch als Superkondensatoren, Ultracaps und dergleichen bezeichnet).

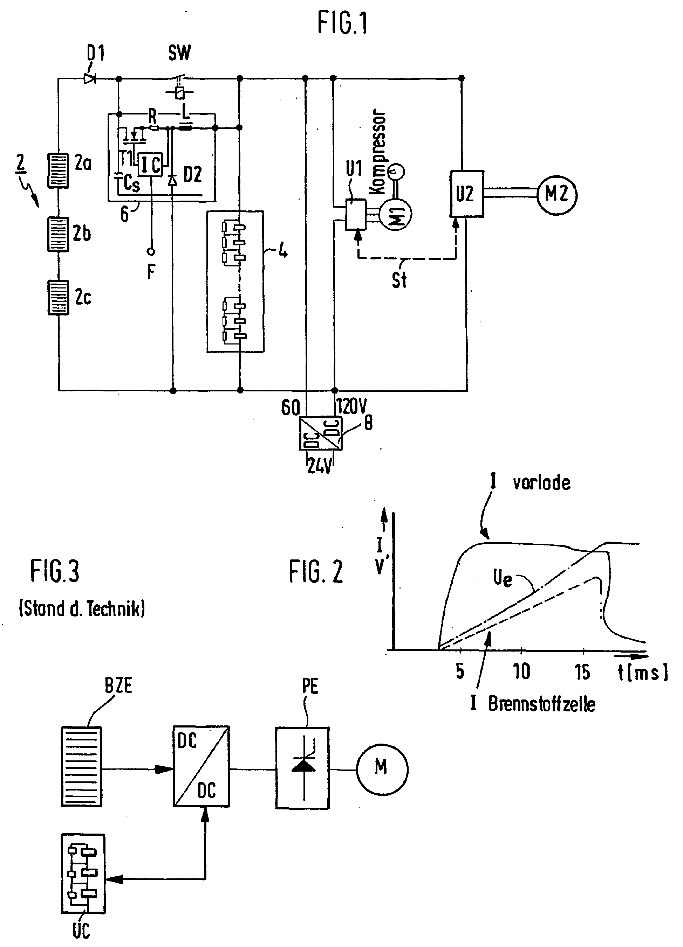

Es gibt Vorschläge (z.B. ALTERNATIVE ANTRIEBSTECHNIK in Auto εt Elektronik 1/2002, Seiten 12 bis 16 sowie das Dokument US-A-2001/0053465), Ultrakondensatoren als Zwischenspeicher bei Antrieben mit Brennstoffzelle einzusetzen. Fig. 3 zeigt schematisch eine solche elektrische Antriebsquelle für einen elektromotorischen Antrieb. Nach Fig. 3 ist ein Brennstoffzellenstapel BZE über einen DC-DC-Wandler (Gleichspannungswandler) an eine Leistungselektronikeinheit TE angeschlossen, die einen Antriebsmotor M speist. Außerdem ist an den DC-DC-Wandler eine Ultrakondensatoreinheit UC angeschlossen.

Die in Fig. 3 dargestellte Schaltung arbeitet folgendermaßen: Die Brennstoffzelleneinheit liefert über den DC-DC-Wandler die für den Betrieb des Motors M benötigte elektrische Leistung. Die Ultrakondensatoreinheit UC wird aufgeladen durch Energie, die von der Brennstoffzelleneinheit BZE kommt, oder die von dem Motor M, wenn dieser im Bremsbetrieb als Generator arbeitet, über die Leistungselektronik PE und den DC-DC-Wandler zurück gegeben wird. Im Fall einer erhöhten Leistungsabforderung durch den Motor M wird die Energiemenge, die die Brennstoffzelleneinheit dann nicht zur Verfügung stellen kann, aus der Ultrakondensatoreinheit UC entnommen. Das Zurückspeichern von Energie aus dem im Generatorbetrieb arbeitenden Motor M in die Ultrakondensatoreinheit UC ist nur möglich, wenn die Ultrakondensatoreinheit teilentleert ist. Ist dies nicht der Fall, muss der Motor vom Generatorbetrieb ausgeschlossen werden, oder die anfallende Leistung muss als Verlustwärme anderweitig abgeführt werden.

Die in Fig. 3 dargestellte Schaltung arbeitet im Prinzip zufriedenstellend, nur ist der Schaltungsaufbau selbst mit erheblichem Aufwand verbunden. Für sämtliche zu erwartenden Betriebsfälle muss die Leistungselektronik entsprechend arbeiten und ist dementsprechend teuer. Wie durch die angesprochenen Situationen deutlich wird, ist ein ausgeklügeltes Leistungs- und Energieverwaltungssystem erforderlich. Die gilt insbesondere für den Einsatz der Ultrakondensatoreinheit, die zu jedem Zeitpunkt in den passenden Speicherzustand versetzt werden muss.

Der Erfindung liegt die Aufgabe zugrunde, eine elektrische Antriebsquelle der eingangs genannten Art anzugeben, die schaltungstechnisch vereinfacht ist.

Gelöst wird diese Aufgabe durch den Verzicht auf einen Gleichspannungswandler.

Es hat sich gezeigt, dass man bei für den praktischen Betrieb abzusehenden Leistungsanforderungen bzw. abzusehendem Leistungsprofil auf den Gleichspannungswandler (DC-DC-Wandler) verzichten kann, ohne dass es zu einer Beeinträchtigung während des Betriebs des von der Antriebsquelle angetriebenen Geräts kommt. Diese Erkenntnis ist insofern überraschend, weil spezielle Arten von Fahrzeugen, die ein überschaubares Betriebsverhalten (dieses beinhaltet Leistungsspitzen, maximale Belastungsintervalle etc.) aufweisen, schon seit längerer Zeit gibt, so z. B. Hubstapler, die in der Regel nur über kurze Strecken - mit Last oder ohne Last - gefahren werden, und die nur in zeitlich begrenzten Intervallen Hubarbeiten verrichten. Die Erfindung ist speziell bei hubstaplern anwendbar, grundsätzlich aber auch bei PKWs, Bussen, Baggern etc., vorausgesetzt, man kann voraussehen, wie die möglichen Belastungsphasen des Fahrzeugs verlaufen und man kann dementsprechend das Leistungsvermögen der Brennstoffzelleneinheit und die Kapazität der Ultrakondensatoreinheit auswählen.

Ein spezielles Problem bei dem Einsatz von Ultrakondensatoren ergibt sich durch den technisch bedingten Umstand, dass die Kondensatoren, wenn sie direkt an eine im Betrieb befindliche Brennstoffzelle angeschlossen werden, möglicherweise vollständig entladen sind. In diesem Fall nämlich fließt ein extrem starker Kurzschlussstrom aus der Brennstoffzelle in die Ultrakondensatoren, was die Brennstoffzelle überlastet, mit möglicherweise schädliche Folgen.

Um dieses Problem zu lösen, schafft die Erfindung in einer besonders bevorzugten Ausgestaltung eine ansteuerbare Vorladeschaltung, die die Ultrakondensatoreinheit vorlädt.

"Ansteuerbar" bedeutet hier, dass die Vorladeschaltung durch ein spezielles Signal, z.B. während einer bestimmten Zeitspanne nach dem Einschalten des Antriebs, aktiviert wird, damit die Vorladeschaltung während einer gewissen Zeit arbeitet und so die Ultrakondensatoreinheit mit einem relativ schwachen Strom vorlädt. Dabei ist dieser Vorladestrom so bemessen, dass er die Brennstoffzelleneinheit nicht beschädigt.

Zweckmäßigerweise befindet sich zwischen der Brennstoffzelleneinheit und der Ultrakondensatoreinheit ein Trennschalter, z.B. in Form eines Hauptschützes. Dieses Hauptschütz wird zum Vorladen der Ultrakondensatoreinheit (z.B. durch eine Nebenschlussschaltung) ersetzt von der ansteuerbaren Vorladeschaltung. Die Vorladeschaltung kann im einfachsten Fall ein Halbleiterschalter sein, beispielsweise in Form eines MOSFETs.

In einer besonders bevorzugten Ausführungsform ist vorgesehen, dass die Vorladeschaltung einen Halbleiterschalter, insbesondere einen MOSFET, enthält, außerdem eine PWM-Steuerung, die mit dem Gate des Halbleiterschalters gekoppelt ist und an das Gate ein Gatesignal in Abhängigkeit des gemessenen Stromflusses in dem Halbleiterschalter gibt. PWM-Steuerungen sind als fertige integrierte Schaltungen (ICs) im Handel erhältlich. Eine solche Schaltung enthält einen Eingang, an den ein Signal gegeben wird, welches der gemessenen Stromstärke durch den Halbleiterschalter entspricht, und die Schaltung erzeugt ein Gatesignal für den Halbleiterschalter, durch welches der Halbleiterschalter abhängig von der gemessenen Stromstärke mehr oder weniger stark in den Öffnungszustand geschaltet wird.

Bevorzugt liegt zwischen dem Halbleiterschalter und der Ultrakondensatoreinheit eine Speicherdrossel. Die von dieser Speicherdrossel gespeicherte Energie wird bei geschlossenem Halbleiterschalter in die Ultrakondensatoreinheit eingespeist. Nachdem die Ultrakondensatoreinheit auf eine gewisse Spannung aufgeladen ist, kann die Vorladeschaltung abgeschaltet werden, so dass nach Schließen des Hauptschützes eine direkte Parallelschaltung zwischen der Brennstoffzelleneinheit, der Ultrakondensatoreinheit und dem motorischen Antrieb gegeben ist.

Die Antriebsquelle kann direkt an eine existierende Elektronik beispielsweise eines Hubstaplers angeschlossen werden. Durch die Vorladeschaltung wird eine Beschädigung der Brennstoffzelleneinheit zuverlässig verhindert. Durch die erfindungsgemäße Maßnahme bietet sich die Möglichkeit, die typische Kennlinie einer Brennstoffzelle zu nutzen, die die Parallelschaltung der vorerwähnten Komponenten (Brennstoffzelle, Ultrakondensator und Antrieb) sinnvoll macht.

Bei einer Brennstoffzelleneinheit hängt die Ausgangsspannung ab von der Anzahl der Zellen (es sind jeweils mehrere Zellen zu einem Stapel oder "Stack" zusammengefasst) und der jeweiligen Belastung. Wird die Brennstoffzelle oder Brennstoffzelleneinheit maximal belastet, so sinkt die Spannung an der Brennstoffzelle auf ca. 60% der Leerlaufspannung. In diesem Betriebszustand werden die Ultrakondensatoren der Ultrakondensatoreinheit relativ schnell aufgeladen (20 bis 40 Sekunden), bis sie die maximale, der Leerlaufspannung entsprechende Spannung erreichen (wenn die Belastung wieder Null ist).

Wenn nun plötzlich viel Leistung von dem Antrieb abgefordert wird, so wird diese Leistung größtenteils von den Ultrakondensatoren bereitgestellt. Das Entladen der Ultrakondensatoren hält an, bis das Spannungsniveau der Brennstoffzelleneinheit erreicht ist. In einem typischen praktischen Beispiel stehen dann zwischen dem Beginn der Maximalleistungsanforderung und dem Ende der Entladung, d.h. dem Erreichen der Leerlaufspannung der Brennstoffzelleneinheit, bis zu ca. 45 kW zur Verfügung. Bei Spannungsgleichheit zwischen UItrakondensatoreinheit und Brennstoffzelleneinheit steht dann die Nennleistung der Brennstoffzelleneinheit zur Verfügung, beispielsweise 20 kW. Weil die vorerwähnten Komponenten direkt parallel geschaltet werden können, entfallen die bisher üblichen aufwändigen DC-DC-Wandler sowie die Energiemanagement-Elektronik.

Als Beispiel wurde oben mehrmals ein Elektrofahrzeug in Form eines Hub-oder Gabelstaplers erwähnt. Die Erfindung ist auch bei anderen Fahrzeugtypen einsetzbar, z.B. bei Pkw's, Baufahrzeugen, Bussen und dergleichen.

Im Folgenden wird ein Ausführungsbeispiel der Erfindung an Hand der Zeichnung näher erläutert. Es zeigen:
- Fig. 1: eine Schaltungsskizze einer elektrischen Antriebsquelle für einen motorischen Antrieb gemäß der Erfindung;
- Fig. 2: ein Diagramm, welches den Verlauf des Eingangs- und des Ausgangsstroms während der Vorladung sowie der Spannung an einer erfindungsgemäß eingesetzten Ultrakondensatoreinheit veranschaulicht;
- Fig. 3: ein schematisches Diagramm einer bekannten elektrischen Antriebsquelle für einen motorischen Antrieb, und
- Fig. 4a-4c: Diagramme, die unterschiedliche Betriebsparameter eines mit einer erfindungsgemäßen Antriebsquelle angetriebenen Hubstaplers während typischer Bewegungsvorgänge des Hubstaplers veranschaulichen.

Fig. 1 zeigt eine Brennstoffzelleneinheit 2, bestehend aus drei Brennstoffzellenstapeln oder -"Stacks" 2a, 2b und 2c. Dazu parallel geschaltet ist eine Ultrakondensatoreinheit 4, und zu diesen beiden Schaltungszweigen jeweils parallel geschaltet ist ein erster Elektromotor M1 mit zugehöriger Steuerlektronik U1 sowie ein zweiter Motor M2 mit zugehöriger Steuerelektronik U2. Der Motor M1 betreibt z.B. eine Ölpumpe, der Motor M2 ist ein Antriebsmotor für einen Hubstapler. Hier kann die Steuerelektronik U3 als "Master" fungieren, die mit ihr über eine Steuerleitung St verbundene Steuerelektronik U1 arbeitet als "Slave".

Zwischen der Brennstoffzelleneinheit 2 und der Ultrakondensatoreinheit 4 liegt ein Hauptschütz SW, welches im Ruhezustand sowie in einem im Folgenden zu beschreibenden Vorladezustand für die Ultrakondensatoreinheit 4 geöffnet wird. In Reihe zu dem Hauptschütz SW liegt eine Diode D1.

Wenn die Ultrakondensatoreinheit 4 z.B. neu ist oder längere Zeit nicht in Betrieb war, ist sie vollständig entladen. Würde bei der Inbetriebnahme das Hauptschütz SW geschlossen, ohne dass besondere Maßnahmen getroffen sind, so würde der Strom aus den Brennstoffzellen der Brennstoffzelleneinheit 2 direkt in die Ultrakondensatoreinheit 4 fließen. Der extrem hohe Strom würde die Brennstoffzellen beschädigen.

Gegebenenfalls wird bei der Inbetriebnahme nach längeren Stillstandszeiten - aber möglicherweise auch bei jeder Inbetriebnahme - das Hauptschütz SW erst nach Abschluss des Vorladevorgangs geschlossen. Zuerst wird nach vorhandener Brennstoffzellen-Spannung das Freigabesignal an einen Freigabeeingang F einer Vorladeschaltung 6 gelegt. Durch das Freigabesignal F wird ein in der Vorladeschaltung 6 befindliches IC aktiviert, d.h. eine PWM-Steuerung (Pulsweitenmodulations-Steuerung), die an einem Ausgang ein Gatesignal auf das Gate eines MOSFET ausgeführten Halbleiterschalters T1 gibt und damit den MOSFET öffnet. Der durch den MOSFET fließende, aus der Brennstoffzelleneinheit 2 über die Diode D1 kommende Strom fließt durch den Messwiderstand R, der dem MOSFET nachgeschaltet ist. Die Spannung am Messwiderstand R ist repräsentativ für die Stärke des Stromflusses in dem MSOFET T1. Das Spannungssignal wird von dem IC erfasst, so dass das IC ein entsprechendes PWM-Gatesignal für den MOSFET T1 erzeugt. Bei starkem Stromfluss werden die Impulsdauern des PWM-Signals verkürzt, so dass der Stromfluss verringert wird.

In den Impulspausen des PWM-Gatesignals wird die zuvor jeweils in eine Drosselspule L gespeicherte Energie auf die Ultrakondensatoreinheit 4 gegeben. Dabei wird der Stromfluss durch eine Freilaufdiode D2 ermöglicht. Ein Kondensator Cₛ der Vorladeschaltung 6 dient zur Spannungsstabilisierung.

In einem praktischen Beispiel beträgt der Ladestrom zum Vorladen der Ultrakondensatoren ca. 40A. Bei einer vorgegebenen Spannung wird das Hauptschütz SW geschlossen, so dass der volle Strom fließen kann. Das Freigabesignal F kann dann niedrigen Pegel annehmen, so dass die Vorladeschaltung 6 deaktiviert wird.

Der Messwiderstand R ist relativ klein bemessen. Es treten kaum Verluste während des Vorladestadiums der Ultrakondensatoreinheit auf. Man kann die Schaltung so auslegen, dass die bei der Vorladung entstehenden Verluste nicht größer sind als eine Grenzverlustleistung von z.B. 200W.

Fig. 2 zeigt den Verlauf von Eingangs- und Ausgangsstrom bei einem praktischen Beispiel einer Ultrakondensatoreinheit. Zu Testzwecken wurde eine Schaltung mit Hilfe eines "Modell-SuperCap" einer Kapazität von 5100 µF aufgeladen. Der gesamte Ladevorgang dauerte ca. 12 ms. In der Ladephase steigt die Spannung Ue der Ultrakondensatoreinheit etwa proportional zu dem Eingangsstrom an. Nach ca. 10 ms war eine Spannung von 70 V erreicht. Hieraus lässt sich hochrechnen, dass bei für Antriebe geeigneten Ultrakondensatoren mit einer Kapazität von ca. 60 F ein Ladevorgang ca. 100 Sekunden andauert. Wie in Fig. 1 dargestellt ist, ist zu den parallel geschalteten Komponenten Brennstoffzelle, Ultrakondensatoreinheit und Antrieb (System 1 mit den Komponenten U1, M1 und System 2 mit den Komponenten U2, M2) noch ein DC-DC-Wandler 8 mit seinem Ausgang gekoppelt. Der Eingang des DC-DC-Wandlers 8 für die Steuerspannung ist an eine Batterie angeschlossen.

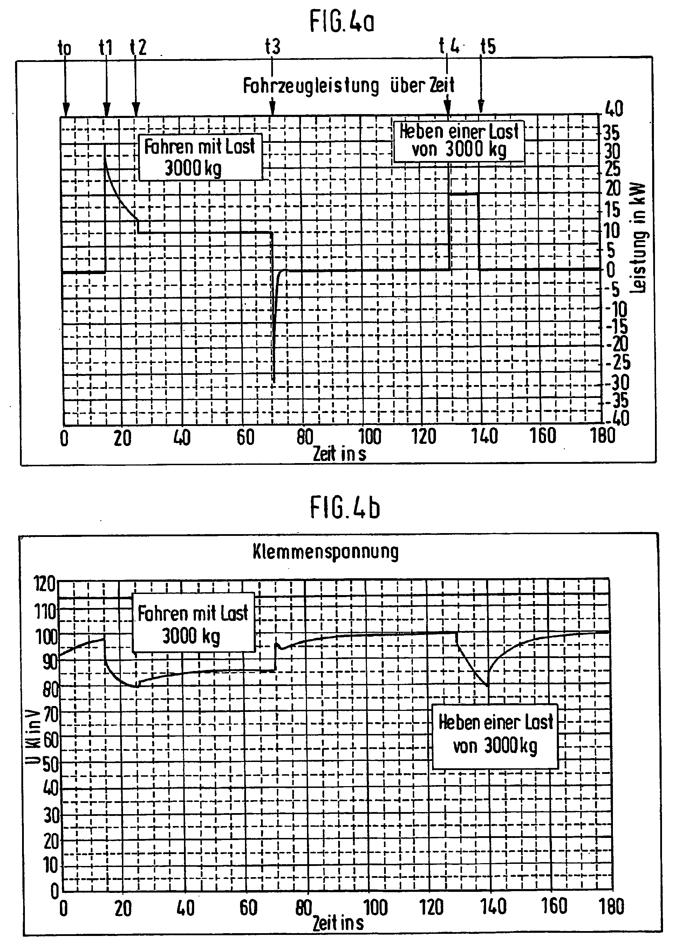

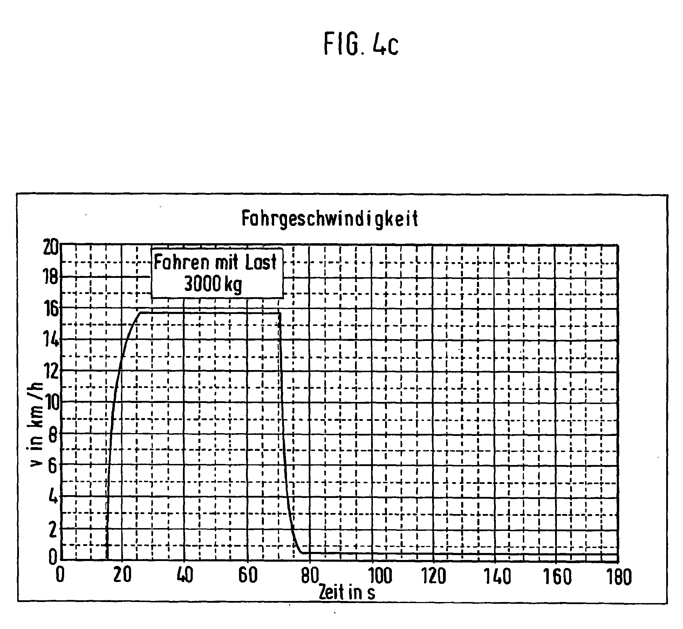

Anhand der Fig. 4 soll im Folgenden das typische Verhalten des Hubstaplers beim Betrieb näher betrachtet werden. Hierzu ist in Fig. 4a die Fahrzeugleistung des Hubstaplers aufgetragen. Im Zeitpunkt t0 befindet sich das Fahrzeug in Ruhe, d. h. es fährt nicht und verrichtet auch keine Hubarbeiten. In diesem Zustand wird weder Leistung gewonnen noch Leistung verbraucht.

In Fig. 4b ist die Klemmenspannung an der aus Brennstoffzelleneinheit 2 und Ultrakondensatoreinheit 4 bestehenden Parallelschaltung angegeben. Wie man sieht, steigt die Klemmenspannung langsam an, wenn der Hubstapler weder fährt noch Hubarbeit verrichtet. Fig. 4c zeigt die Fahrgeschwindigkeit. Im Zeitpunkt t1 beginnt der Hubstapler zu fahren, hier mit einer Last von 3000 kg. Das Fahrzeug beschleunigt, wie aus Fig. 4c ersichtlich ist. Die Fahrzeugleistung springt durch die einsetzende Beschleunigung auf einen Wert von ca. 33 kW an, sinkt dann allmählich ab, während das Fahrzeug weiter beschleunigt. Im Zeitpunkt t2 ist die Endgeschwindigkeit erreicht. Die Fahrzeugleistung beträgt nun gemäß Fig. 4a konstant etwa 10 kW.

Wie aus Fig. 4b hervorgeht, sinkt beim Anfahren des Fahrzeugs die Klemmenspannung rasch von einem Wert von ca. 100 V auf 80 V, um dann bei konstanter Fahrgeschwindigkeit sich einem konstanten Spannungswert von 75 V ... 85 V anzunähern.

Im Zeitpunkt t3 wird das Fahrzeug abgebremst und erreicht nach kurzer Verzögerungsphase (Fig. 4c) eine Geschwindigkeit von etwa Null.

Durch den Bremsvorgang nimmt das Fahrzeug aufgrund der abgebremsten kinetischen Energie Leistung auf und pendelt sich nach Erreichen des Stillstands des Fahrzeugs bei einem Wert von 0 kW ein.

Ebenfalls im Zeitpunkt t3 nimmt die Klemmenspannung rasch auf einen Wert von ca. 95 V zu und steigt dann langsam auf den Spitzenwert von ca. 100 V an.

Bei stillstehendem Fahrzeug wird im Zeitpunkt t4 das Heben einer 3000 kg betragenden Last begonnen. Dementsprechend steigt gemäß Fig. 4a die Fahrzeugleistung sprungartig auf ca. 20 kW an, bleibt während der gesamten Hebephase nahezu konstant auf diesem Wert und sinkt dann sprungartig wieder auf 0 kW ab.

Während der Hebearbeit sinkt die Klemmenspannung ziemlich rasch auf einen Wert von ca. 80 V, um nach Beendigung der Hebearbeit wieder allmählich auf den Spitzenwert von 100 V anzusteigen.

Wie aus Fig. 4b ersichtlich ist, sinkt im betrachteten Beispiel die Klemmenspannung praktisch nie unter 75 V. Die Leerlaufspannung, d. h. die höchste auftretende Spannung beträgt ca. 100 V. Für das hier betrachtete Beispiel eines Hubstaplers läßt sich absehen, dass auch bei maximaler Leistungsabforderung die Klemmenspannung praktisch nie auf weniger als 60% der Leerlaufspannung absinkt. Es kann also erwartet werden, dass stets ohne Leistungsbegrenzung gearbeitet werden kann. Qualitativ ähnliche Verhältnisse können auch bei anderen Fahrzeugen und Arbeitsgeräten erwartet werden, so z. B. bei Baggern, Baustellenfahrzeugen und dergleichen, aber grundsätzlich auch bei PKWs, Bussen und LKWs.

## Patentansprüche

1. Elektrische Antriebsquelle für einen motorischen Antrieb (M1, M2), mit einer Brennstoffzelleneinheit (2a - 2c) und einem als Ultrakondensatoreinheit ausgeführten Zwischenspeicher (4), der zu der Brennstoffzelleneinheit (2a - 2c) parallel geschaltet ist, und an den der Antrieb (M1, M2) angeschlossen ist, **dadurch gekennzeichnet, dass** bei Verzicht auf einen Gleichspannungswandler eine ansteuerbare Vorladeschaltung (6) zum Vorladen der Ultrakondensatoreinheit (4) parallel geschaltet ist zu einem Trennschalter (SW), der zwischen der Brennstoffzelleneinheit (2) und der Ultrakondensatoreinheit (4) liegt, und dass die Antriebsquelle so eingerichtet ist dass der Trennschalter im Ruhe- und im Vorladezustand geöffnet wird, und bei vorgegebener Spannung sowohl der Trennschalter geschlossen wird als auch die Vorladeschaltung deaktiviert wird.

2. Antriebsquelle nach Anspruch 1,
**dadurch gekennzeichnet, dass** die Vorladeschaltung enthält: einen Halbleiterschalter, insbesondere einen MOSFET (T1); eine PWM-Steuerung, die mit dem Gate des Halbleiterschalters gekoppelt ist und an das Gate ein PWM-Steuersignal in Abhängigkeit des gemessenen Stromflusses in dem Halbleiterschalter gibt.

3. Antriebsquelle nach Anspruch 2,
**dadurch gekennzeichnet, dass** am Ausgang des Halbleiterschalters (D1) ein Messwiderstand (R) liegt, an dem die PWM-Steuerung (IV) ein für den Stromfluss repräsentatives Signal abnimmt.

4. Antriebsquelle nach Anspruch 2 oder 3,
**dadurch gekennzeichnet, dass** zwischen dem Halbleiterschalter und der UItrakondensatoreinheit (4) ein Speicherelement (L), insbesondere eine Speicherdrossel, angeordnet ist.

5. Antriebsquelle nach einem der Ansprüche 1 bis 4,
**dadurch gekennzeichnet, dass** die Vorladeschaltung (6) einen Freigabeanschluss (F) aufweist.

6. Fahrzeug, insbesondere Hubstapler, mit einer elektrischen Antriebsquelle nach einem der Ansprüche 1 bis 5, wobei die Leistung und Spannung der Brennstoffzelleneinheit (2) und die Kapazität der Ultrakondensatoreinheit (4) auf den Antrieb des Fahrzeugs abgestimmt sind.

## Claims

1. Electric drive source for a motorised drive (M1, M2), having a fuel cell unit (2a - 2c) and an intermediate storage means (4) which is in the form of an ultracapacitor unit and which is connected in parallel with the fuel cell unit (2a - 2c) and to which the drive (M1, M2) is connected, **characterised in that**, while dispensing with a DC-DC voltage converter, an actuatable pre-charge circuit (6) for pre-charging the ultracapacitor unit (4) is connected in parallel with an isolating switch (SW) which is located between the fuel cell unit (2) and the ultracapacitor unit (4); and **in that** the drive source is so arranged that the isolating switch is open in the idle and pre-charge state and with a predetermined voltage both the isolating switch is closed and the pre-charge circuit is deactivated.

2. Drive source according to claim 1,
**characterised in that** the pre-charge circuit comprises: a semi-conductor switch, especially a MOSFET (T1); a PWM control means which is coupled to the gate of the semi-conductor switch and which passes to the gate a PWM control signal in dependence on the measured current flow in the semi-conductor switch.

3. Drive source according to claim 2,
**characterised in that** at the output of the semi-conductor switch (D1) there is located a measuring resistor (R) from which the PWM control means (IV) takes a signal representative of the current flow.

4. Drive source according to claim 2 or 3,
**characterised in that** between the semi-conductor switch and the ultracapacitor unit (4) there is arranged a storage element (L), especially a storage inductor.

5. Drive source according to one of claims 1 to 4,
**characterised in that** the pre-charge circuit (6) has an enabling connection (F).

6. Vehicle, especially a stacker truck, having an electric drive source according to one of claims 1 to 5, wherein the power rating and voltage of the fuel cell unit (2) and the capacitance of the ultracapacitor unit (4) are matched to the drive of the vehicle.

## Revendications

1. Source d'entraînement électrique pour un système d'entraînement à moteur (M1, M2), comprenant une unité de pile à combustible (2a-2c) et un accumulateur intermédiaire (4) réalisé sous la forme d'une unité d'ultra-condensateur, qui est monté en parallèle à l'unité de pile à combustible (2a-2c) et auquel est raccordé le système d'entraînement à moteur (M1, M2),
**caractérisée en ce qu'**en l'absence d'un convertisseur de courant continu, un circuit de charge préalable (6) pouvant être commandé, pour la charge préalable de l'unité d'ultra-condensateur (4), est monté en parallèle à un commutateur d'isolement ou sectionneur (SW) qui est placé entre l'unité de pile à combustible (2) et l'unité d'ultra-condensateur (4), et **en ce que** la source d'entraînement est conçue de façon telle que le sectionneur soit ouvert dans l'état de repos et dans l'état de charge préalable, et que, pour une tension prédéterminée, soit produite aussi bien la fermeture du sectionneur que la désactivation du circuit de charge préalable.

2. Source d'entraînement selon la revendication 1,
**caractérisée en ce que** le circuit de charge préalable renferme : un commutateur à semi-conducteur, notamment un transistor du type MOSFET (T1), une commande PWM (commande à modulation de largeur d'impulsion), qui est couplée à la grille du commutateur à semi-conducteur et délivre à la grille un signal de commande PWM en fonction du flux de courant mesuré dans le commutateur à semi-conducteur.

3. Source d'entraînement selon la revendication 2,
**caractérisée en ce qu'**à la sortie du commutateur à semi-conducteur (T1) est montée une résistance de mesure (R) au niveau de laquelle la commande PWM (IV) prélève un signal représentatif du flux de courant.

4. Source d'entraînement selon la revendication 2 ou 3,
**caractérisée en ce qu'**entre le commutateur à semi-conducteur et l'unité d'ultra-condensateur (4) est agencé un élément d'accumulation (L), notamment une bobine de réactance.

5. Source d'entraînement selon l'une des revendications 1 à 4, **caractérisée en ce que** le circuit de charge préalable (6) présente un raccord de validation (F).

6. Véhicule, notamment chariot élévateur, comprenant une source d'entraînement électrique selon l'une des revendications 1 à 5, dans laquelle la puissance et la tension de l'unité de pile à combustible (2) et la capacité de l'unité d'ultra-condensateur (4) sont adaptées au système d'entraînement du véhicule.
